# EUROPÄISCHE PATENTSCHRIFT

(11) **EP 3 245 024 B1**
(45) Veröffentlichungstag und Bekanntmachung des Hinweises auf die Patenterteilung: **02.06.2021**
(21) Anmeldenummer: 16700641.0
(22) Anmeldetag: 15.01.2016
(51) Int. Cl.: B23Q 11/00, B30B 9/12, B65G 33/24

(54) **WERKZEUGMASCHINE MIT FÖRDEREINRICHTUNG ZUR ABFÜHRUNG VON SPÄNEN**
MACHINE TOOL HAVING A CONVEYING DEVICE FOR LEADING AWAY CHIPS
MACHINE-OUTIL PRÉSENTANT UN DISPOSITIF DE TRANSPORT POUR L'ÉVACUATION DE COPEAUX

(30) Priorität: 15.01.2015 DE 102015200558
(43) Veröffentlichungstag der Anmeldung: 22.11.2017
(73) Patentinhaber: DECKEL MAHO Pfronten GmbH, 87459 Pfronten (DE)
(72) Erfinder: KÖCHL, Roland, 6682 Vils (AT); DIETENHAUSER, Wolfgang, 87448 Waltenhofen (DE)
(74) Vertreter: MERH-IP Matias Erny Reichl Hoffmann Patentanwälte PartG mbB
(86) Internationale Anmeldenummer: PCT/EP2016/050767
(87) Internationale Veröffentlichungsnummer: WO 2016/113392

(56) Entgegenhaltungen:
- EP-A2- 0 629 427
- EP-A2- 1 182 005
- DE-A1-102007 044 289
- DE-U1-202004 016 295

## Beschreibung

### Beschreibung

Die vorliegende Erfindung betrifft eine Werkzeugmaschine, insbesondere eine numerisch gesteuerte Werkzeugmaschine, zur spanenden Bearbeitung eines in einem Arbeitsraum der Werkzeugmaschine eingespannten Werkstücks mit einem Werkzeug.

Dies betrifft insbesondere Werkzeugmaschinen wie z.B. Fräsmaschinen, Drehmaschinen, Fräs-/Drehmaschinen, Dreh-/Fräsmaschinen, Universalwerkzeugmaschinen, d.h. insbesondere Universaldrehmaschinen bzw. Universalfräsmaschinen, und Bearbeitungszentren.

Die Werkzeugmaschine umfasst insbesondere ein Maschinenbett, das einen Späneauffangbereich bzw. Spänesammelraum mit zumindest einem arbeitsraumseitig geöffneten Förderkanal zur Sammlung von bei der Bearbeitung des Werkstücks herabfallenden Spänen aufweist, und eine Fördereinrichtung zur Abführung von an dem Späneauffangbereich herabgefallenen Spänen in dem zumindest einen Förderkanal.

### Hintergrund der Erfindung

Eine Werkzeugmaschine ist z.B. aus der DE 10 2012 201 736 A1 bekannt, die eine Universalwerkzeugmaschine mit Spänesammelraum betrifft. Die beispielhafte gattungsgemäße Werkzeugmaschine umfasst ein Maschinenbett eines Maschinengestells, auf dem ein auf Linearführungen geführter Schlitten mit einem Werkstückstisch zum Einspannen eines Werkstücks geführt ist.

Zudem ist eine weitere Werkzeugmaschine in der EP 1 182 005 A2 aufgeführt, welche zur spanenden Metallbearbeitung mit einem unter dem Arbeitsbereich angeordneten Entsorgungssystem für Späne und Flüssigkeiten ausgestattet ist. Insbesondere beinhaltet dieses Entsorgungssystem eine Wanne mit einem wendelförmigen Förderelement und einem Flüssigkeitssammler, welche so angeordnet sind, dass durch den Bearbeitungsprozess anfallende Späne getrennt von den Flüssigkeiten gesammelt und entsorgt werden können.

Die DE 20 2004 016 295 U1 betrifft ferner eine Werkzeugmaschine mit einer Vorrichtung zum Fördern von bei der Bearbeitung von Werkstücken anfallenden Spänen, bestehend aus einem Endlosförderer und einem um den Endlosförderer ausgebildeten Förderkanal. Ferner ist der Endlosförderer als hohle Förderschnecke ausgebildet und besitzt zum verbesserten Transport der Späne einen zentral gelegenen, feststehenden Kern.

Darüber hinaus ist aus der DE 10 2007 044 289 A1 eine weitere Werkzeugmaschine bekannt, in welcher zum Abführen von Spänen ein der Werkzeugmaschine angepasster Aufnahmeraum mitsamt enthaltener Abführvorrichtung integriert wurde. Zur Verbesserung des Abführprozesses ist der Aufnahmeraum zusätzlich zumindest in einen mit einer Fördereinrichtung versehenen, einen mit einer
Spüleinrichtung und einen mit einer Absaugeinrichtung versehenen Maschinenbettabschnitt unterteilt.

Zudem ist in der EP 0 629 427 A2 eine geschraubte Entwässerungsanlage gezeigt, welche eine ringförmige Raumkammer und eine innerhalb der Raumkammer befindliche, rotierbare Spirale umfasst. Ferner ist die Spirale mit einem Unterstützungsring verbunden, welcher innenseitig zur Verbesserung der Flüssigkeitsbewegung in die Spirale eingebracht und zur externen Steuerung gleichermaßen mit der Außenwand der Raumkammer verbunden wurde.

An einem Abschnitt des Maschinenbetts ist weiterhin ein linear verfahrbarer Maschinenständer geführt, an dem ein vertikal verfahrbarer Spindelkopf geführt ist, der eine Arbeitsspindel zum Antreiben eines zerspanenden Werkzeugs aufweist. Das Maschinenbett weist einen Spänesammelraum auf, in dem Späne gesammelt werden, die bei zerspanender Bearbeitung des auf dem Werkstücktisch eingespannten Werkstücks mittels eines an der Arbeitsspindel eingespannten Werkzeugs anfallen.

Der Spänesammelraum der Werkzeugmaschine umfasst einen Förderkanal, in dem eine Förderschnecke angeordnet ist, die dazu geeignet ist, in dem Förderkanal angesammelte Späne in Längsrichtung des Förderkanals zu befördern, indem die Förderschnecke rotatorisch angetrieben wird. Durch eine derartige Fördereinrichtung einer Werkzeugmaschine können die in dem Förderkanal des Spänesammelraums angesammelten Späne zu einer Ausgangsöffnung der Werkzeugmaschine befördert werden, an der ggf. ein externer oder integrierter Späneförderer bzw. eine externe bzw. integrierte Spänefördereinrichtung bereitgestellt sein kann.

Die Förderschnecken derartiger Fördereinrichtungen zum Abführen von Spänen an Werkzeugmaschinen sind im Stand der Technik meist als einstückiges Formteil ausgeführt mit einem inneren Wellenabschnitt, um den sich ein Spiralabschnitt windet. Bei Beschädigung bzw. Bruch der Förderschnecke muss diese im Ganzen ausgetauscht werden, sodass für eine Wartung bei Beschädigung bzw. Zerstörung der Förderschnecke lange Maschinenstillstandzeiten für die Wartung in Kauf genommen werden müssen. Zudem ist die Herstellung einer derartigen Förderschnecke kostspielig, aufwendig und komplex, da ein schweres gussförmiges Einzelteil mit teilweise beträchtlichen Längen hergestellt werden muss. Zusätzlich ist aufgrund der dabei anfallenden großen Masse der Förderschnecke ein relativ großer bzw. antriebsstarker Antrieb für die Drehbewegung der Förderschnecke erforderlich.

Ausgehend von den vorstehend genannten Problemen des Stands der Technik ist es eine Aufgabe der Erfindung, eine Werkzeugmaschine mit einer Fördereinrichtung zum Abführen von Spänen bereit zu stellen, die im Gegensatz zum Stand der Technik einfacher zu warten ist und insbesondere einfacher und wartungsärmer aufgebaut ist, insbesondere bevorzugt mit kleinerem Gewicht und dadurch kleineren Antrieben.

### Zusammenfassung der Erfindung

Zur Lösung der vorstehend genannten Erfindung wird eine Werkzeugmaschine gemäß Anspruch 1 und eine Fördereinrichtung gemäß Anspruch 13 vorgeschlagen. Abhängige Ansprüche betreffen bevorzugte Ausführungsbeispiele der Erfindung.

Gemäß einem ersten Aspekt der Erfindung wird gemäß einem Ausführungsbeispiel eine Werkzeugmaschine zur spanenden Bearbeitung eines in einem Arbeitsraum der Werkzeugmaschine eingespannten Werkstücks mit einem Werkzeug vorgeschlagen.

Gattungsgemäß umfasst die Werkzeugmaschine neben etwaigen weiteren Elementen eines Maschinengestells insbesondere ein Maschinenbett, das einen Späneauffangbereich oder ggf. mehrere Späneauffangsbereiche umfasst mit einem oder mehreren arbeitsraumseitig geöffneten Förderkanälen zur Sammlung von bei der Bearbeitung des Werkstücks herabfallenden bzw. anfallenden Spänen. Weiterhin umfasst die Werkzeugmaschine insbesondere eine Fördereinrichtung zur Abführung von an dem Späneauffangsbereich bzw. den Späneauffangsbereichen herabgefallenen bzw. angefallenen Spänen in dem einen oder den mehreren Förderkanälen.

Erfindungsgemäß ist eine derartige Werkzeugmaschine insbesondere dadurch gekennzeichnet, dass an der Fördereinrichtung eine feststehende Trägerachse bereitgestellt wird, die sich in dem zumindest einen Förderkanal in Längsrichtung des Förderkanals erstreckt. Hierbei ist die feststehende Trägerachse bevorzugt zumindest an einem Ende orts- und/oder drehfest angebracht bzw. befestigt, insbesondere bevorzugt derart, dass sie nicht in dem Förderkanal in Längsrichtung verschiebbar ist und/oder nicht um eine Längsachse rotierbar ist. Weiterhin wird bevorzugt an der Fördereinrichtung ein Antrieb vorgesehen, der dazu eingerichtet ist eine Drehbewegung eines Spiralelements anzutreiben, welches an der feststehenden Trägerachse bevorzugt drehbar gehalten ist.

Hierbei liegt der Erfindung insbesondere der Grundgedanke zugrunde, dass im Gegensatz zu einer einstückig bzw. einteilg bereitgestellten Förderschnecke mit einem inneren Wellenabschnitt und äußerem Spiralabschnitt ein mehrteiliger Aufbau bereitgestellt wird, bei dem eine feststehende Trägerachse, die nicht angetrieben wird bzw. angetrieben werden muss, bereitgestellt wird, an der als zusätzliches Element ein drehbar gehaltenes Spiralelement gehalten wird, welches sich insbesondere spiralförmig um die feststehende Trägerachse windet und/oder um die feststehende Trägerachse rotiert bzw. drehantreibbar ist.

Dies hat insbesondere den Vorteil, dass bei Beschädigung bzw. Bruch des Spiralelements nicht die ganze Förderschnecke ausgetauscht werden muss, sondern nur ein neues Spiralelement auf die bestehende feststehende Trägerachse aufgesteckt wird bzw. werden kann, und/oder dass bei Beschädigung oder Bruch der Trägerachse nur die Trägerachse ausgewechselt werden kann, wobei das ältere Spiralelement weiterverwendet werden kann.

Zudem ist bei der Herstellung einer derartigen Fördereinrichtung bzw. deren Zubehör die Herstellung der Teilelemente einfacher, insbesondere da die feststehende Trägerachse sehr einfach und mit niedrigem Gewicht, z.B. als Hohlachse hergestellt werden kann. Dies ermöglicht auch eine Reduktion des Gesamtgewichts, wobei insbesondere ein schwächerer und somit kleinerer bzw. effizienterer Antrieb bereitgestellt werden kann, sodass die Fördereinrichtung bzw. deren Herstellung vereinfacht wird und weniger Platz raubende Elemente bzw. Bauteile an der Werkzeugmaschine verwendet werden.

Gemäß einer zweckmäßigen Ausführung der Werkzeugmaschine ist die Fördereinrichtung insbesondere bei Antreiben der Drehbewegung des Spiralelements um die feststehende Trägerachse bevorzugt dazu eingerichtet, Späne in dem zumindest einen Förderkanal zu einem ersten Endabschnitt des zumindest einen Förderkanals abzuführen. Dies hat den Vorteil, dass die Späne zu dem Endabschnitt und einem daran ggf. anschließenden Späneförderer abgeführt werden können.

Bevorzugt umfasst hierbei die Werkzeugmaschine weiterhin zumindest eine Abführöffnung zum Abführen von Spänen aus dem zumindest einen Förderkanal, wobei die Abführöffnung insbesondere an dem ersten Endabschnitt des zumindest einen Förderkanals angeordnet ist bzw. angeordnet sein kann.

Dies hat den Vorteil, dass Späne durch die Abführöffnung abgeführt werden können, wobei z.B. eine externe Spänefördereinrichtung bzw. ein integrierter Späneförderer angeschlossen sein kann, um die Späne weiter abzuführen bzw. zu sammeln.

Gemäß einer weiteren zweckmäßigen Ausführung der Werkzeugmaschine kann der Antrieb z.B. an einem zweiten Endabschitt des zumindest einen Förderkanals angeordnet sein, der auf der dem ersten Endabschnitt entgegengesetzten Seite des zumindest einen Förderkanals angeordnet sein kann.

Dies hat insbesondere den Vorteil, dass der Antrieb auf einer Seite angeordnet ist, die der vorstehend genannten Abführungsöffnung entgegengesetzt ist, sodass der Antrieb und dessen Ausgestaltung die Abförderung von Spänen nicht behindert bzw. beeinflusst, insbesondere da die Späne von dem Antrieb an dem zweiten Endabschnitt des zumindest einen Förderkanals wegbefördert werden können zur anderen Seite des Förderkanals, insbesondere zum ersten Endabschnitt des zumindest einen Förderkanals.

In weiteren bevorzugten Ausführungsbeispielen kann der zumindest eine Förderkanal weiterhin einen abfallenden Neigungswinkel aufweisen, insbesondere einen zu dem ersten Endabschnitt hin abfallenden Neigungswinkel.

Dies hat den Vorteil, dass neben der Beförderung von Spänen mittels Antreiben des Spiralelements um die feststehende Trägerachse zudem anfallende Kühlflüssigkeit bzw. Schmierflüssigkeit aufgrund des abfallenden Neigungswinkels hin zu dem ersten Endabschnitt fließen kann, und an diesem bzw. an der Abflussöffnung an dem ersten Endabschnitt gesammelt bzw. abgeführt werden kann.

In alternativen Ausführungsformen kann der zumindest eine Förderkanal auch einen zu dem ersten Endabschnitt hin ansteigenden Neigungswinkel aufweisen, insbesondere derart, dass Späne mittels Antreiben des Spiralelements um die feststehende Trägerachse zu dem ersten Endabschnitt hin befördert werden, Kühlflüssigkeit und/oder Schmierflüssigkeit allerdings aufgrund des zum ersten Endabschnitt hin ansteigenden Neigungswinkel in einer zur Späneförderrichtung entgegengesetzten Richtung abfließt.

In derartigen Ausführungsformen ist bevorzugt in dem zumindest einen Förderkanal an einem zweiten Endabschnitt, der auf der dem ersten Endabschnitt entgegengesetzten Seite angeordnet ist, eine Abflussöffnung zum Abfließen von Schmier- bzw. Kühlflüssigkeit bereitgestellt. Dies hat den Vorteil, dass eine effiziente Trennung von Spänen und Schmier- bzw. Kühlflüssigkeit bereits in dem Förderkanal durchgeführt werden kann, indem Späne zu der einen Seite abgefördert werden, während Schmier- bzw. Kühlflüssigkeit aufgrund des Neigungswinkels zur anderen Seite abfließt.

Gemäß weiteren beispielhaften Ausführungen kann die feststehende Trägerachse zumindest an einem der Endabschnitte des zumindest einen Förderkanals gehalten sein, oder ggf. auch an beiden Endabschnitten des zumindest einen Förderkanals.

Gemäß der Erfindung weist die feststehende Trägerachse weiterhin zumindest eine oder auch mehrere oberflächlich verlaufende Nutvertiefung auf, die sich bevorzugt in Längsrichtung des Förderkanals bzw. in Längsrichtung der feststehenden Trägerachse erstreckt bzw. erstrecken. Dies hat den Vorteil, dass die feststehende Trägerachse oberflächlich eine Oberflächenstruktur aufweist, die in Längsrichtung des Förderkanals erstreckt ist, und somit eine Richtungsführung für Späne bereitstellt, die durch Antreiben des Spiralelements befördert werden, und entlang der Nutvertiefung der feststehenden Trägerachse geführt sind.

In bevorzugten Ausführungsbeispielen kann die feststehende Trägerachse als Hohlachse ausgebildet sein. Dies hat den Vorteil, dass die feststehende Trägerachse sowohl sehr stabil und starr ausgebildet sein kann, dies jedoch aufgrund der Ausführung als Hohlachse zudem bei sehr niedrigem Gewicht, sodass sowohl die Herstellung vereinfacht ist, als auch die Halterungen für die feststehende Trägerachse vereinfacht sein können, da nur ein niedrigeres Gewicht gehalten sein muss, und aufgrund des niedrigen Gewichts platzsparendere und leichtere Antriebe verwendbar sind.

Bevorzugt weist die feststehende Trägerachse ein im Wesentlichen kreisförmiges Querschnittsprofil auf.

Bevorzugt weist das Spiralelement in Längsrichtung des zumindest einen Förderkanals gesehen, ein im Wesentlichen ringförmiges Profil mit im wesentlichen kreisförmigen Außenumfangsprofil und/oder mit im Wesentlichen kreisförmigen Innenumfangsprofil auf. In besonders zweckmäßigen Ausgestaltungen der vorstehend genannten Ausführungen ist ein Außendurchmesser des kreisförmigen Querschnittprofils der feststehenden Trägerachse bevorzugt kleiner als ein Durchmesser des kreisförmigen Innenumfangsprofils des Spiralelements.

Dies hat den Vorteil, dass zwischen dem Außenumfang des Querschnittsprofils der feststehenden Trägerachse und dem Innenumfang des Spiralelements ein Spalt entsteht, sodass bei Antreiben des Spiralelements um die feststehende Trägerachse keine Reibung zwischen diesen beiden Elementen entsteht, sodass der Antrieb kleiner und effizienter ausgestaltet sein kann.

Zudem entsteht hierbei auch eine Toleranz bei kleinen Verbiegungen des Spiralelements und/oder der feststehenden Trägerachse bzw. bei nicht exakt axialer Ausrichtung der feststehenden Trägerachse mit dem Spiralelement. Bevorzugt ist dieser Spalt jedoch so vorgesehen, dass er kleiner ist als ein durchschnittlicher Durchmesser der anfallenden Späne, um das Abfördern von Spänen zu vereinfachen und zu verhindern, dass Späne durch den Spalt zwischen der feststehenden Trägerachse und dem Spiralelement durchrutschen bzw. sich verkanten können.

In weiteren bevorzugten Ausgestaltungen weist der zumindest eine Förderkanal bevorzugt zumindest auf einer dem Werkzeugraum der Maschine abgewandten Seite ein im Wesentlichen teilkreisförmiges Querschnittsprofil auf.

Bevorzugt ist hierbei ein Innendurchmesser des teilkreisförmigen Querschnittsprofils des zumindest einen Förderkanals größer als ein Durchmesser des kreisförmigen Außenumfangprofils des Spiralelements.

Dies hat den Vorteil, dass zwischen der Oberfläche des Förderkanals und des Spiralelements ein Spalt bereitstellbar ist, sodass bei Antreiben des Spiralelements ohne Bewegung mit dem Förderkanal keine Reibung entsteht.

Somit kann der Antrieb kleiner und effizienter ausgestaltet sein und zudem entsteht eine Toleranz bei leichten Durchbiegungen des Förderkanals und/oder des Spiralelements. Auch hierbei ist der Spalt bevorzugt kleiner als der durchschnittliche Durchmesser der anfallenden Späne, um zu verhindern, dass Späne in den Spalt zwischen Spiralelement und Förderkanalsoberfläche durchrutschen bzw. sich verkanten können.

In weiteren bevorzugten Ausgestaltungen der Erfindung kann der zumindest eine Förderkanal z.B. ein Formblech umfassen bzw. durch ein Formblech ausgestaltet sein. Dies hat den Vorteil, dass die Herstellung der Fördereinrichtung einfacher und kostengünstiger gestaltet sein kann.

In weiteren bevorzugten Ausführungen kann der Späneauffangbereich zumindest einen weiteren arbeitsraumseitig geöffneten Förderkanal zur Sammlung zur bei der Bearbeitung des Werkstücks herabfallenden Spänen aufweisen, wobei bevorzugt die Fördereinrichtung zumindest eine weitere feststehende Trägerachse aufweist, die sich bevorzugt in dem zumindest einen weiteren Förderkanal bevorzugt in Längsrichtung des weiteren Förderkanals erstreckt, wobei bevorzugt ein weiteres Spiralelement an der weiteren feststehenden Trägerachse drehbar gehalten sein kann, und wobei bevorzugt die Fördereinrichtung weiterhin einen weiteren Antrieb zum Antreiben der Drehbewegung des weiteren Spiralelements um die weitere feststehende Trägerachse umfasst.

Dies hat den Vorteil, dass an verschiedenen Seiten bzw. in verschiedenen Bereichen des Späneauffangbereichs Förderkanäle mit der bevorzugten Ausgestaltung bzw. bevorzugten Ausgestaltungen der feststehenden Trägerachse und/oder des Spiralelements gemäß den vorstehenden Ausführungen bereitgestellt werden kann.

Bevorzugt sind hierbei die zwei oder mehreren Förderkanäle des Späneauffangbereichs derart angeordnet, dass sie sich parallel zueinander erstrecken, bzw. im Wesentlichen parallel zueinander erstrecken, insbesondere derart, dass Endabschnitte der Förderkanäle mit Anschlussöffnungen für externe Späneförderer auf einer gemeinsamen Seite der Werkzeugmaschine angeordnet sein können.

### Kurzbeschreibung der Figuren

Fig. 1 zeigt eine beispielhaft schematische Perspektivdarstellung eines Teils einer Werkzeugmaschine mit einer Fördereinrichtung zur Abführung von Spänen gemäß einem Ausführungsbeispiel der Erfindung.
Fig. 2 zeigt eine weitere beispielhafte schematische Perspektivdarstellung des Teils der Werkzeugmaschine gemäß Fig. 1.
Fig. 3 zeigt eine weitere beispielhafte schematische Perspektivdarstellung des Teils einer Werkzeugmaschine gemäß Fig. 1.
Fig. 4 zeigt eine beispielhafte schematische Draufsicht auf den Teil einer Werkzeugmaschine gemäß Fig.1.
Fig. 5 zeigt eine beispielhafte Querschnittdarstellung durch ein Maschinenbett mit Fördereinrichtung eines Teils einer Werkzeugmaschine gemäß Fig. 1.
Figs. 6A und 6B zeigen beispielhaft schematische Längsschnitte durch den Teil einer Werkzeugmaschine gemäß Fig. 1.
Figs. 7A und 7B zeigen beispielhafte schematische Perspektivdarstellungen einer Fördereinrichtung gemäß einem Ausführungsbeispiel der Erfindung.
Fig. 8 zeigt eine beispielhafte schematische Perspektivdarstellung eines Antriebs einer Fördereinrichtung gemäß den Figs. 7A und 7B.
Fig. 9 zeigt eine beispielhaft schematische Perspektivdarstellung eines Teils einer Fördereinrichtung gemäß Figs. 7A und 7B.
Fig. 10 zeigt eine beispielhafte schematische Längsschnittdarstellung des Teils gemäß Fig. 9.
Fig. 11 zeigt eine beispielhafte schematische Querschnittdarstellung durch ein Teil gemäß Fig. 9.

### Detaillierte Beschreibung der Figuren und bevorzugter Ausführungsbeispiele der vorliegenden Erfindung

Im Folgenden werden Beispiele der vorliegenden Erfindung detailliert unter Bezugnahme auf die Figuren beschrieben. Gleiche bzw. ähnliche Elemente in den Figuren können hierbei mit gleichen Bezugszeichen bezeichnet sein.

Es sei hervorgehoben, dass die vorliegende Erfindung jedoch in keinster Weise auf die im folgenden beschriebenen Ausführungsbeispiele und deren Ausführungsmerkmale begrenzt ist, sondern weiterhin Modifikationen der Ausführungsbeispiele umfasst, die durch Modifikationen der Merkmale der beschriebenen Beispiele bzw. Kombination von Merkmalen der beschriebenen Beispiele im Rahmen des Schutzumfangs der unabhängigen Ansprüche umfasst sind.

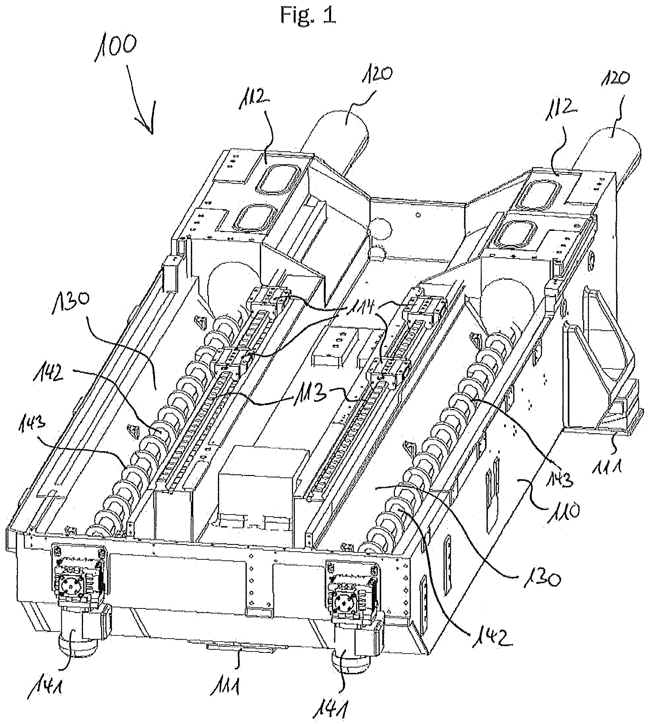

Die Figs. 1, 2 und 3 zeigen unterschiedliche beispielhafte schematische Perspektivdarstellungen eines Teils einer Werkzeugmaschine 100, insbesondere eines Maschinenbetts 110 der Werkzeugmaschine 100. Das Maschinenbett weist beispielhaft an den Seiten bzw. der Unterseite Standfüße 111 auf, mittels denen das Maschinenbett horizontal ausgerichtet auf einem Werkstattboden aufgestellt werden kann.

Das Maschinenbett umfasst weiterhin Abschnitte 112, auf denen bei einer fertigen Werkzeugmaschine 100 z.B. ein weiterer (feststehender oder verfahrbarer) Maschinenständer aufgesetzt werden kann, z.B. ein Maschinenständer zum Halten eines Schwenkkopfes, eines Spindelkopfes bzw. einer Arbeitsspindel einer Werkzeugmaschine.

Weiterhin umfasst das Maschinenbett 100 Längsführungen 113 (Linearführungen) mit Führungsschlitten 114, auf denen z.B. ein Maschinentisch (z.B. ein rotierbarer Drehtisch/Rundtisch oder ein drehfester Werkzeugtisch) gehalten werden kann zur Einspannung eines Werkstücks auf dem Maschinentisch. Mittels der Schlitten 114 auf den Linearführungen 113 kann ein derartiger Maschinentisch, Rundtisch/Drehtisch bzw. Werkzeugtisch linear in Richtung der Längsrichtung der Führungen 113 verfahren werden.

Gemäß dem Ausführungsbeispiel der vorliegenden Erfindung weist das Maschinenbett 110 weiterhin eine Fördereinrichtung zum Abführen von Spänen auf. Beispielhaft ist hierbei gezeigt, dass zwei Späneauffangbereiche 130 auf entgegengesetzten Seiten der Linearführungen 113 bereitgestellt sind, wobei Späne, die bei Bearbeitung eines Werkstücks an der Werkzeugmaschine entstehen, herabfallen in diese Späneauffangbereiche 130 und dort gesammelt werden können.

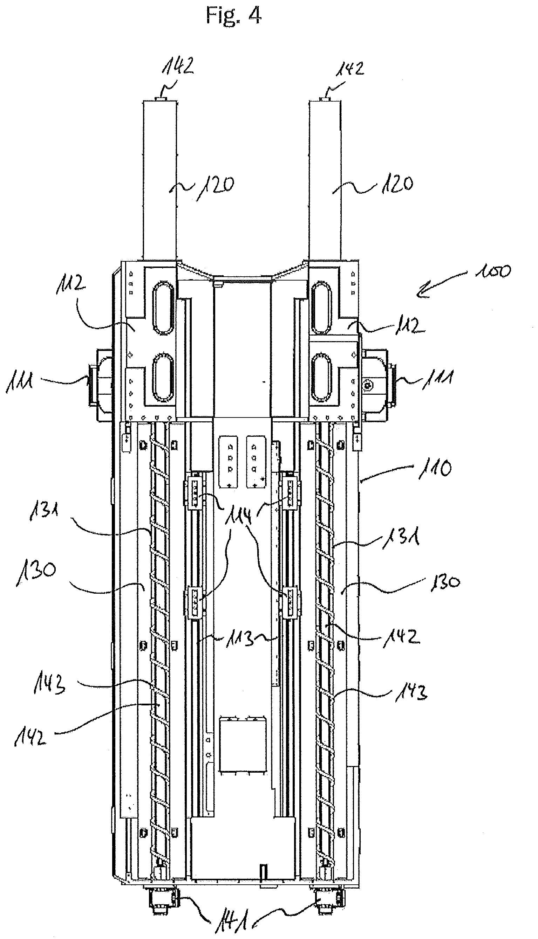

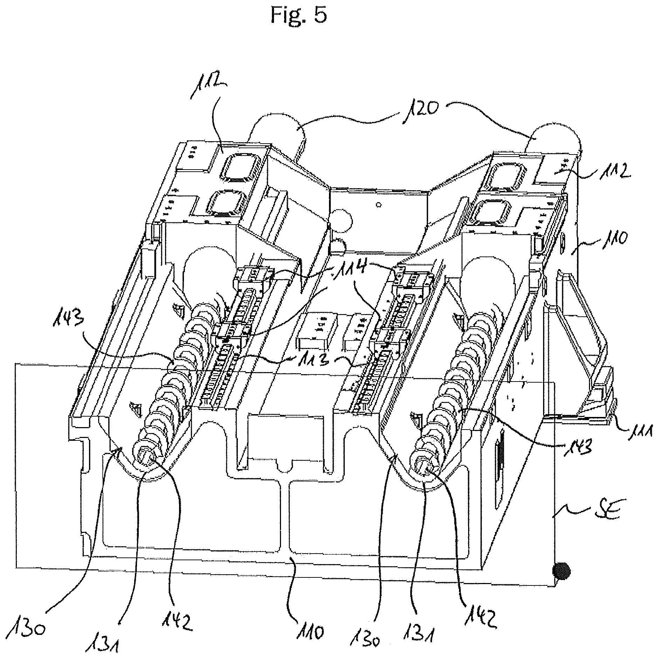

Beispielhaft weist jeder der Späneauffangbereiche 130 einen jeweiligen Förderkanal 131 auf. Siehe hierzu insbesondere die Draufsicht der Fig. 4 und die Querschnittdarstellung der Fig. 5, die weiter unten beschrieben werden.

In Längsrichtung des Späneauffangbereichs und in Richtung der Linearführungen 113 werden herabgefallene Späne mittels der Fördereinrichtung zur hinteren Seite der Werkzeugmaschine abgeführt, an denen die Anschlussöffnungen 120 angeordnet sind.

An der Vorderseite des Maschinenbetts 110 sind beispielhaft an den Endabschnitten der jeweiligen Späneauffangbereiche 130 die jeweiligen Antriebe 141 der Fördereinrichtung angeordnet.

Die Fördereinrichtung umfasst weiterhin in jedem der Auffangbereiche 130 eine jeweilige feststehende Trägerachse 142, die sich in Längsrichtung des jeweiligen Späneauffangbereichs 130 bzw. parallel zur Längsrichtung der Führungsschienen 113 erstreckt.

An jeder der feststehenden Trägerachsen 142 ist weiterhin ein Spiralelement drehbar gehalten, welches von einem Endabschnitt zum anderen Endabschnitt bevorzugt einteilig ausgestaltet ist und die jeweilige feststehende Trägerachse 142 spiralschraubenartig umschließt bzw. umwindet.

Die Fördereinrichtung ist insbesondere dazu eingerichtet, mittels den jeweiligen Antrieben 141 das jeweilige Spiralelement 143 um die jeweilige feststehende Trägerachse 142 zu rotieren bzw. zu drehen. Dies unterscheidet sich insbesondere von vorbekannten Fördereinrichtungen des Stands der Technik in dem ein Vollspiralelement bzw. eine einstückige oder einteilige Förderschnecke bereitgestellt wurde, welches/welche insgesamt um eine Rotationsachse rotiert wird und sowohl einen Spiralabschnitt als auch einen inneren Längswellenabschnitt in einteiliger Form umfasst.

Durch Antreiben des jeweiligen Spiralelements 143 um die jeweilige feststehende Trägerachse 142 mittels des jeweiligen Antriebs 141 werden in dem Spänesammelbereich 130 aufgefangene Späne von den jeweiligen Antrieben 141 weg und beispielhaft zu dem entgegengesetzten Endabschnitt mit den Anschlussöffnungen 120 abgeführt bzw. zu diesen gefördert.

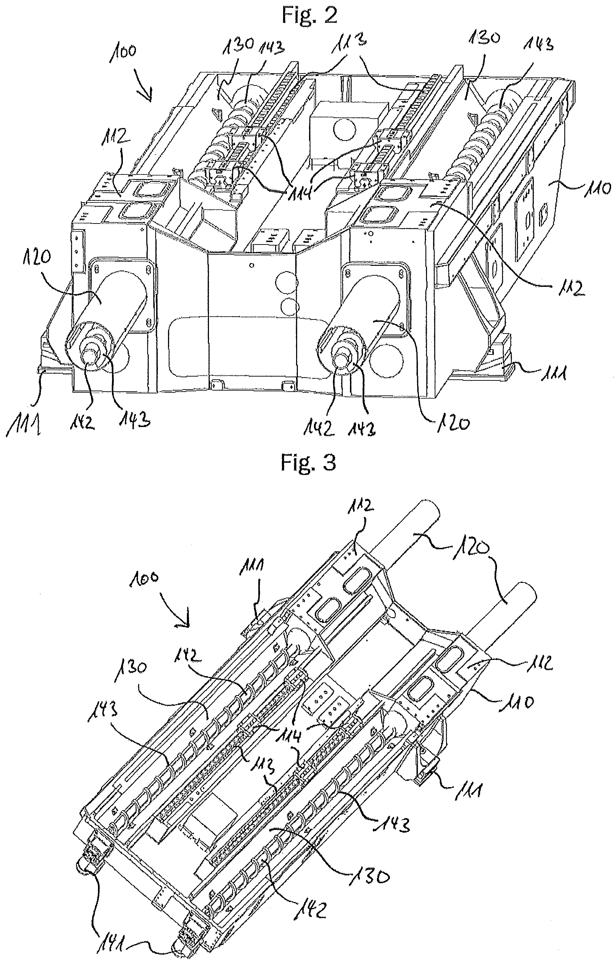

Wie in Fig. 2 beispielhaft dargestellt ist, werden die Späne dann von der Fördereinrichtung aus den Anschlussabschnitten 120 heraus abgeführt. Hierbei ist es möglich an dieser Seite des Maschinenbetts 110 eine weitere Spänefördereinrichtung vorzusehen, wie z.B. einen extern anschließbaren Späneförderer gemäß vorbekannter Ausführungen. Eine derartige Spänefördereinrichtung kann hierbei an der Werkzeugmaschine integriert sein oder als separate Einrichtung bereitgestellt werden.

Fig. 4 zeigt eine beispielhafte Draufsicht des Maschinenbetts 110 der Werkzeugmaschine 100 mit der Fördereinrichtung gemäß dem Ausführungsbeispiel der Erfindung gemäß den Figs. 1 bis 3.

Hierbei ist insbesondere dargestellt, dass die Antriebe 141 beispielhaft auf einer entgegengesetzten Seite am einen Endabschnitt des jeweiligen Späneauffangbereichs 130 vorgesehen sind, die dem Endabschnitt auf der anderen Seite mit den Anschlussöffnungen 120 gegenüberliegen.

Weiterhin ist erkennbar, dass die Längsrichtungen der feststehenden Trägerachsen 142, sowie die Längsrichtung der Förderkanäle 131 beispielhaft parallel zueinander ausgerichtet sind und insbesondere auch beispielhaft parallel zu den Führungsschienen 113 mit den Linearschlitten 114. Dies hat den Vorteil, dass die beiden beispielhaften Späneauffangbereiche 130 auf gegenüberliegenden Seiten des Werkzeugtisches, der auf den Schlitten 114 angeordnet sein kann, angeordnet sind und symmetrisch auf beiden Seiten anfallende Späne sammeln können und mittels der Fördereinrichtung abführen können.

Es ist jedoch zu beachten, dass die vorliegende Erfindung in keinster Weise auf Ausführungsbeispiele mit zwei Förderkanälen bzw. zwei derartigen Förderteileinrichtungen mit Trägerachse 142 und Spiralelement 143 beschränkt sein muss, sondern insbesondere umfasst die vorliegende Erfindung weiterhin Ausführungsbeispiele mit nur einem zentral oder seitlich angeordneten Förderkanal 131 mit einer oder mehrerer feststehender Trägerachsen mit einem oder mehreren Spiralelementen.

Des Weiteren umfasst die vorliegende Erfindung natürlich Ausführungsbeispiele mit zwei oder mehr Förderkanälen, die z.B. paarweise parallel aber auch paarweise quer oder senkrecht angeordnet sein können.

Fig. 5 zeigt beispielhaft eine Querschnittdarstellung durch das Maschinenbett 110 der Werkzeugmaschine 100 gemäß den Figs. 1 bis 3, wobei insbesondere die Förderkanäle 131 der jeweiligen Spänesammel- bzw. Späneauffangbereiche 130 dargestellt sind, und die darin in Längsrichtung verlaufenden Trägerachsen 142 mit den darum drehbar gehaltenen Spiralelementen 143.

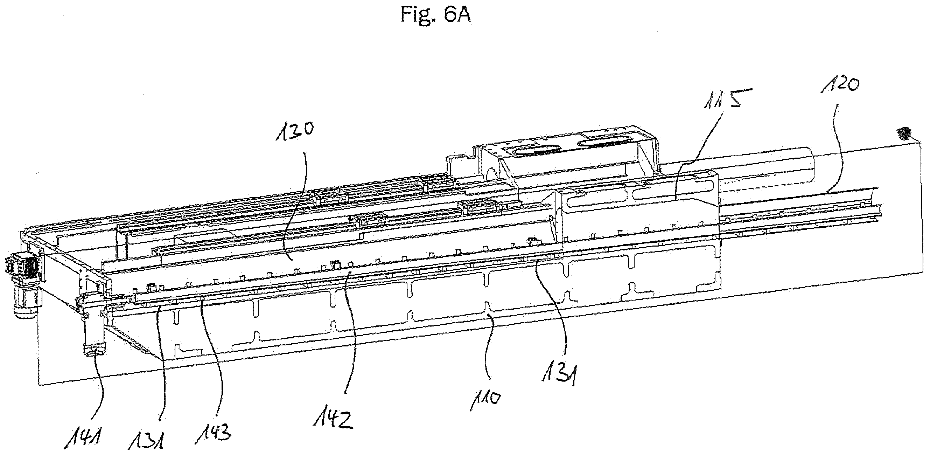

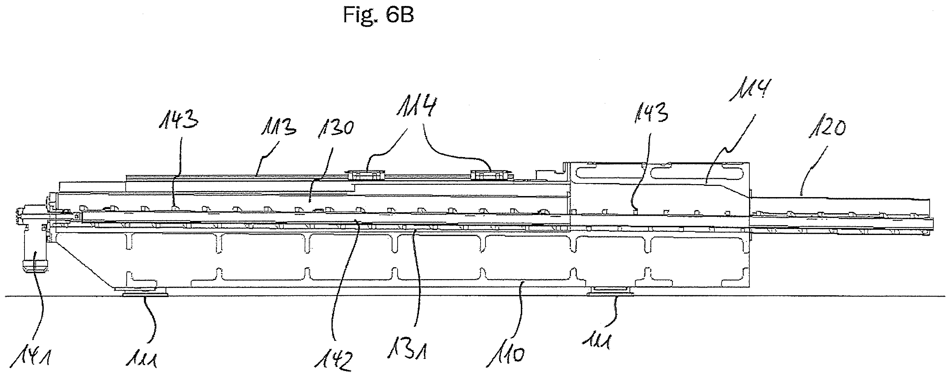

Die Figs. 6A und 6B illustrieren beispielhaft Längsschnitte durch das Maschinenbett 110, insbesondere senkrecht zu dem Querschnitt aus Fig. 5, wobei der Längsschnitt der Figs. 6A und 6B insbesondere ebenfalls durch eine der Trägerachsen 142 geführt ist.

Insbesondere in Fig. 6B ist gezeigt, dass der Förderkanal 131 einen sehr kleinen abfallenden Neigungswinkel hat, mit dem der Förderkanal von dem einen Endabschnitt, an dem der Antrieb 141 angeordnet ist zu dem anderen Endabschnitt, an dem das Anschlusselement bzw. die Anschlussöffnung 120 angeordnet ist, abfällt. In diesem Ausführungsbeispiel beträgt die abfallende Neigung ca. 1%, wobei Neigungswinkel größer 0° und kleiner 5°denkbar sind.

Dieser abfallende Neigungswinkel zur Anschlussöffnung 120 hin, führt dazu, dass zusätzlich zu den beförderten Spänen weiterhin Kühl- bzw. Schmierflüssigkeit, die in den Späneauffangbereichen 130 angesammelt wird zu der Anschlussöffnung 120 hin abfließt und dort ebenfalls gesammelt und ggf. wiederverwendet werden kann.

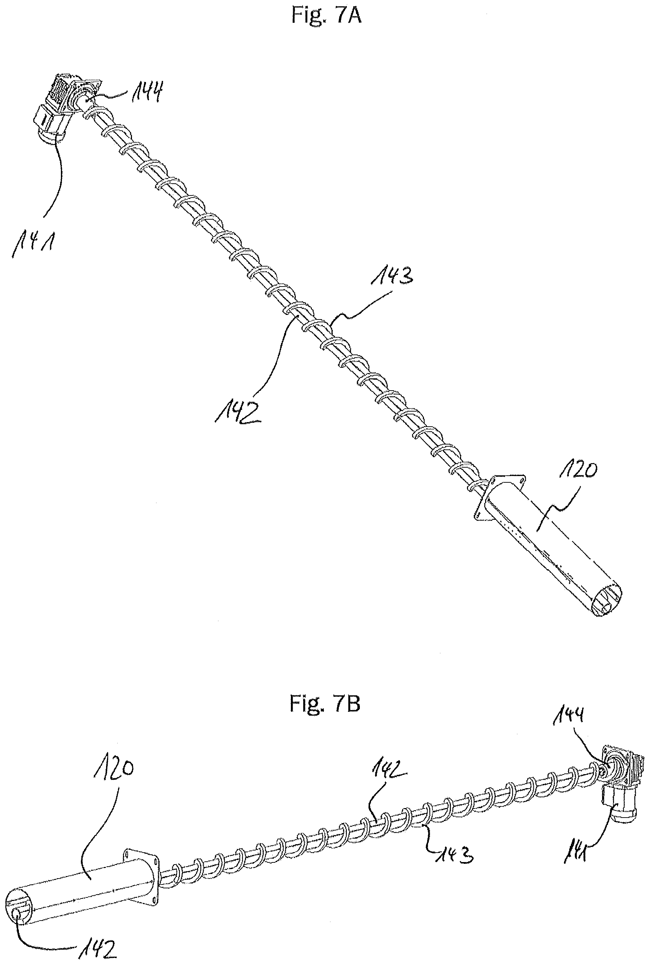

Die Figs. 7A und 7B zeigen schematische beispielhafte Perspektivdarstellungen eines Teils der Fördereinrichtung gemäß dem Ausführungsbeispiel der Figs. 1 bis 3, wobei der Antrieb 141 an einer Seite gezeigt ist und das Anschlusselement bzw. die Anschlussöffnung 120 auf der anderen Seite.

Weiterhin ist die feststehende Trägerachse 142 gezeigt, die sich von einem Ende zum anderen Ende hin erstreckt und in Längsrichtung des Förderkanals (nicht gezeigt) geführt sein kann. Um die feststehende Trägerachse 142 windet sich das Spiralelement 143 in der Form einer Federspirale, wobei das Spiralelement 143 drehbar an der feststehenden Trägerachse 142 gehalten ist und durch den Antrieb 141 angetrieben werden kann.

Hierzu steht der Antrieb 141 über ein Anschlusselement 144 des Spiralelements 143 in Verbindung. Durch rotatorisches Antreiben des Spiralelements 143 mittels des Antriebs 141 um die feststehende Trägerachse 142 entsteht eine schraubenartige Bewegung, die die Späne in Richtung weg von dem Antrieb 141 und hin zu dem Anschlusselement bzw. der Anschlussöffnung 120 hin befördert.

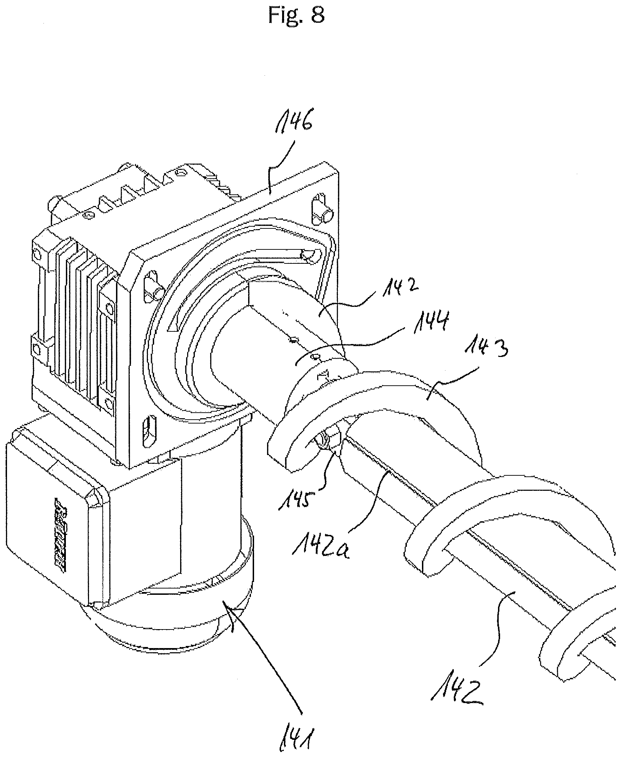

Fig. 8 zeigt eine perspektivische Teildarstellung des Antriebs 141 aus Fig. 7A und 7B, wobei beispielhaft dargestellt ist, dass ein Ende des Spiralelements 143 an dem Anschlusselement 144 befestigt ist, oder als ein Formelement mit diesem ausgebildet ist.

Weiterhin ist in Fig. 8 in Detaildarstellung beispielhaft eine Nutvertiefung 142a dargestellt, die sich in Längsrichtung auf der Oberfläche der feststehenden Trägerachse 142 erstreckt.

Die feststehende Trägerachse wird über ein Befestigungselement 145 gehalten, insbesondere drehfest relativ zu dem Spiralelement 143, sodass durch rotatorisches Antreiben des Anschlusselements 144 mittels des Antriebs 144 die Drehbewegung auf das Spiralelement 143 übertragen wird, derart dass das Spiralelement 143 sich um die Längsachse der feststehenden Trägerachse 142 dreht, wobei die feststehende Trägerachse 142 rotatorisch feststeht und mittels des Befestigungselements 145 gehalten ist.

In bevorzugten Ausführungen kann hierbei das Anschlusselement 144 im Inneren hohl ausgebildet sein, um im Inneren ein weiteres Befestigungselement bzw. eine Befestigung vorzusehen, die das Befestigungselement 145 in Fig. 8 rotationsfest bzw. drehfest hält.

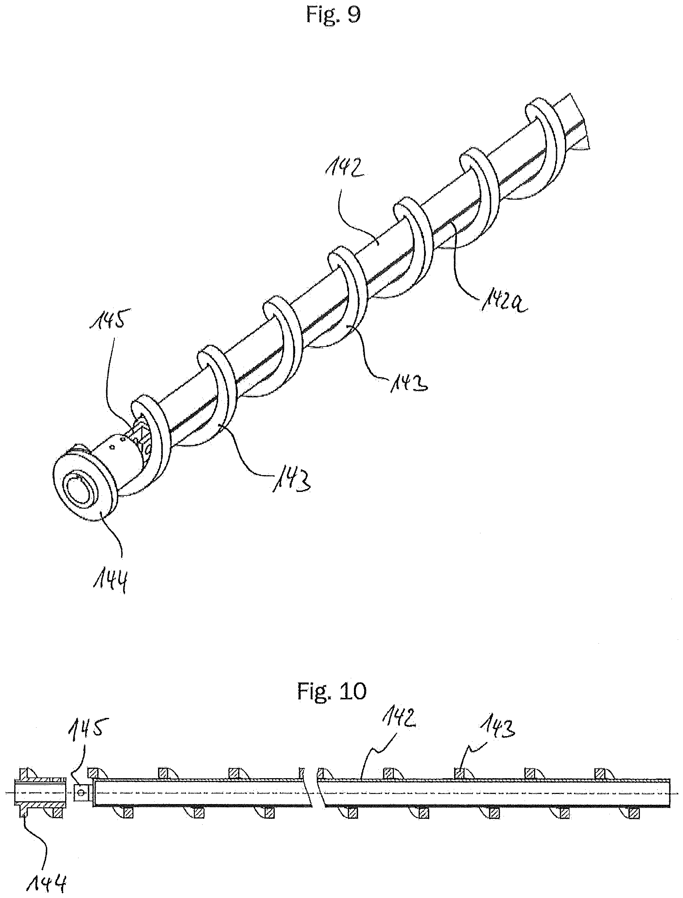

Fig. 9 zeigt eine beispielhafte Perspektivdarstellung eines Teils der Kombination aus Trägerachse 142 und des Spiralelements 143. Weiterhin ist beispielhaft das Anschlusselement 144 gezeigt, an dem das Spiralelement 143 beispielhaft mit einem Ende befestigt ist, oder welches mit dem Spiralelement 143 als ein einstückiges Formelement ausgebildet sein kann.

Die feststehende Trägerachse 142 mit der sich in Längsrichtung erstreckenden Nutvertiefung 142a ist beispielhaft im Inneren des Spiralelements 143 geführt und weist beispielhaft an einem Ende ein in diesem Zustand nicht befestigtes Befestigungselement 145 auf, welches durch ein weiteres durch das hohle Befestigungselement 144 durchführbares Befestigungselement befestigt werden kann.

Fig. 10 zeigt einen beispielhaften Längsschnitt durch die Kombination aus Elementen gemäß Fig. 9, wobei insbesondere die beispielhaft hohle Ausgestaltung des Befestigungselements 144 erkennbar ist, durch welches mittels eines weiteren Befestigungselements das Befestigungselement 145 an einem Ende der feststehenden Trägerachse 142 befestigt werden kann. Das Befestigungselement 145 ist beispielhaft an einem Ende der feststehenden Trägerachse 142 befestigt, wobei in diesem Längsschnitt gemäß Fig. 10 erkennbar ist, dass die feststehende Trägerachse 142 beispielhaft als Hohlachse ausgebildet ist.

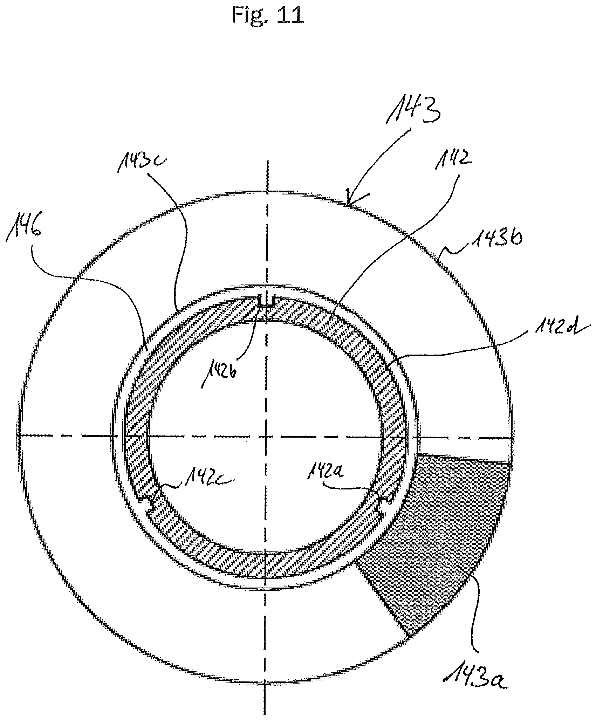

Fig. 11 zeigt einen beispielhaften Querschnitt durch die Kombination aus Elementen gemäß Fig. 9, wobei insbesondere erkennbar ist, dass die als Hohlachse ausgebildete feststehende Trägerachse 142 beispielhaft drei Nutvertiefungen 142a, 142b und 142c umfasst, die sich in Längsrichtung der feststehenden Trägerachse erstrecken und hierbei Führungsvertiefungen für in Längsrichtung beförderte Späne bilden. Natürlich sind ebenfalls beispielhafte Ausführungen mit einer, zwei oder mehr als drei Führungsvertiefungen denkbar.

Das Bezugszeichen 143a in Fig. 11 zeigt einen Schnitt durch das Spiralelement 143, wobei in Draufsicht in Längsrichtung der feststehenden Trägerachse 142 bzw. des Spiralelements 143 weiterhin die außerhalb der Schnittebene hinter der Schnittebene liegenden Profilkonturen des Spiralelements 143 dargestellt sind.

Beispielhaft ist das Spiralelement derart ausgestaltet, dass das Profil in Draufsicht in Längsrichtung der feststehenden Trägerachse 142 bzw. des Spiralelements 143 ringförmig ausgestaltet ist, insbesondere derart, dass beispielhaft ein Außenumfang 143b und ein Innenumfang 143c im Wesentlichen kreisförmig ausgebildet sind.

Weiterhin ist in Fig. 11 beispielhaft dargestellt, dass auch ein Außendurchmesser 142d des Querschnittsprofils der feststehenden Trägerachse 142 im Wesentlichen kreisförmig ausgebildet ist, wobei der Durchmesser des Außenumfangs der feststehenden Trägerachse 142 kleiner ist als der Innendurchmesser des Profils 143c des Spiralelements 143, insbesondere derart, dass ein Spalt 146 (insbesondere kreisförmig) zwischen dem Außenumfang 142d der feststehenden Trägerachse 142 und dem Innenumfang 143c des Spiralelements 143 entsteht, sodass die Drehung des Spiralelements 143 um die feststehende Trägerachse 142 reibungslosfrei ermöglicht ist, und daher nur ein kleinerer Antrieb zum Antreiben der Drehbewegung des Spiralelements 143 ausreicht.

Bevorzugt ist die Spaltbreite des Spalts 146 hierbei jedoch kleiner ausgebildet als ein durchschnittlicher Späneumfang, der bei der Bearbeitung des Werkstücks an der Werkzeugmaschine 100 anfallenden Späne, derart dass die Späne nicht durch den Spalt 146 durchrutschen bzw. sich in diesem verfangen oder verkeilen.

Sollte dennoch ein kleinerer Span in dem Spalt verfangen sein, würde dieser aufgrund der Drehbewegung des Spiralelements 143 um den Umfang der feststehenden Trägerachse 142 mitbewegt, bis er einen der Nutvertiefungsabschnitte 142a bis 142c erreicht, in dem die Verkeilung bzw. Verkantung aufgrund der Nutvertiefung wieder freigegeben wird.

## Patentansprüche

1. Werkzeugmaschine zur spanenden Bearbeitung eines in einem Arbeitsraum der Werkzeugmaschine eingespannten Werkstücks mit einem Werkzeug, mit:
- einem Maschinenbett (110), das einen Späneauffangbereich (130) mit zumindest einem arbeitsraumseitig geöffneten Förderkanal (131) zur Sammlung von bei der Bearbeitung des Werkstücks herabfallenden Spänen aufweist, und
- einer Fördereinrichtung zur Abführung von an dem Späneauffangbereich (130) herabgefallenen Spänen in dem zumindest einen Förderkanal (131),
wobei die Fördereinrichtung eine feststehende Trägerachse (142) aufweist, die sich in dem zumindest einen Förderkanal (131) in Längsrichtung des Förderkanals erstreckt, wobei ein Spiralelement (143) an der feststehenden Trägerachse (142) drehbar gehalten ist, und
die Fördereinrichtung weiterhin einen Antrieb (141) zum Antreiben der Drehbewegung des Spiralelements (143) um die feststehende Trägerachse (142) umfasst, **dadurch gekennzeichnet, dass** die feststehende Trägerachse (142) zumindest eine oberflächlich verlaufende Nutvertiefung (142a; 142b; 142c) aufweist, die sich in Längsrichtung des Förderkanals erstreckt.

2. Werkzeugmaschine gemäß Anspruch 1, **dadurch gekennzeichnet, dass**
die Fördereinrichtung bei Antreiben der Drehbewegung des Spiralelements (143) um die feststehende Trägerachse (142) dazu eingerichtet ist, Späne zu einem ersten Endabschnitt des zumindest einen Förderkanals (131) abzuführen.

3. Werkzeugmaschine gemäß Anspruch 2, **gekennzeichnet durch**
eine Abführöffnung (120; 115) zum Abführen von Spänen aus dem zumindest einen Förderkanal (131), wobei die Abführöffnung an dem ersten Endabschnitt des zumindest einen Förderkanals angeordnet ist.

4. Werkzeugmaschine gemäß Anspruch 2 oder 3, **dadurch gekennzeichnet, dass**
der Antrieb (141) an einem zweiten Endabschnitt des zumindest einen Förderkanals (131) angeordnet ist, der auf der dem ersten Endabschnitt entgegengesetzten Seite des zumindest einen Förderkanals angeordnet ist.

5. Werkzeugmaschine gemäß einem der Ansprüche 2 bis 4, **dadurch gekennzeichnet, dass**
der zumindest eine Förderkanal (131) einen zu dem ersten Endabschnitt hin abfallenden Neigungswinkel aufweist.

6. Werkzeugmaschine gemäß einem der Ansprüche 2 bis 4, **dadurch gekennzeichnet, dass**
der zumindest eine Förderkanal (131) einen zu dem ersten Endabschnitt hin ansteigenden Neigungswinkel aufweist.

7. Werkzeugmaschine gemäß Anspruch 6, **dadurch gekennzeichnet, dass**
der zumindest eine Förderkanal (131) an einem zweiten Endabschnitt, der auf der dem ersten Endabschnitt entgegengesetzten Seite des Förderkanals angeordnet ist, eine Abflussöffnung zum Abfließen von Schmier- bzw. Kühlflüssigkeit aufweist.

8. Werkzeugmaschine gemäß einem der vorstehenden Ansprüche, **dadurch gekennzeichnet, dass**
die feststehende Trägerachse (142) als Hohlachse ausgebildet ist.

9. Werkzeugmaschine gemäß einem der vorstehenden Ansprüche, **dadurch gekennzeichnet, dass**
die feststehende Trägerachse (142) ein im Wesentlichen kreisförmiges Querschnittsprofil aufweist und das Spiralelement (143) in Längsrichtung des zumindest einen Förderkanals gesehen ein im Wesentlichen ringförmiges Profil mit im Wesentlichen kreisförmigen Außenumfangsprofil (143b) und/oder mit im Wesentlichen kreisförmigen Innenumfangsprofil (143a) aufweist.

10. Werkzeugmaschine gemäß Anspruch 9, **dadurch gekennzeichnet, dass**
ein Außendurchmesser (142d) des kreisförmigen Querschnittsprofils der feststehenden Trägerachse (142) kleiner ist als ein Durchmesser des kreisförmigen Innenumfangsprofils (143c) des Spiralelements.

11. Werkzeugmaschine gemäß einem der vorstehenden Ansprüche, **dadurch gekennzeichnet, dass**
der zumindest eine Förderkanal (131) ein Formblech umfasst oder durch ein Formblech ausgestaltet ist.

12. Werkzeugmaschine gemäß einem der vorstehenden Ansprüche, **dadurch gekennzeichnet, dass**
der Späneauffangbereich (130) zumindest einen weiteren arbeitsraumseitig geöffneten Förderkanal (131) zur Sammlung von bei der Bearbeitung des Werkstücks herabfallenden Spänen aufweist, und
die Fördereinrichtung zumindest eine weitere feststehende Trägerachse (142) aufweist, die sich in dem zumindest einen weiteren Förderkanal (131) in Längsrichtung des weiteren Förderkanals erstreckt, wobei ein weiteres Spiralelement (143) an der weiteren feststehenden Trägerachse (142) drehbar gehalten ist, und wobei die Fördereinrichtung weiterhin einen weiteren Antrieb (141) zum Antreiben der Drehbewegung des weiteren Spiralelements (143) um die weitere feststehende Trägerachse (142) umfasst,
die Förderkanäle (131) des Späneauffangbereichs (130) sich insbesondere parallel zueinander erstrecken.

13. Fördereinrichtung zur Abführung von an einem Späneauffangbereich (130) eines Maschinenbetts einer Werkzeugmaschine herabgefallenen Spänen zum Einsatz an der Werkzeugmaschine zur spanenden Bearbeitung eines in einem Arbeitsraum der Werkzeugmaschine eingespannten Werkstücks mit einem Werkzeug, mit:
- eine am Maschinenbett feststehend befestigbaren Trägerachse (142),
- einem Spiralelement (143), dass in eingebautem Zustand an der Werkzeugmaschine an der Trägerachse (142) drehbar gehalten ist, und
- einem Antrieb (141) zum Antreiben der Drehbewegung des Spiralelements (143) um die feststehende Trägerachse (142), **dadurch gekennzeichnet, dass**
die feststehende Trägerachse (142) zumindest eine oberflächlich verlaufende Nutvertiefung (142a; 142b; 142c) aufweist, die sich in Längsrichtung des Förderkanals erstreckt.

## Claims

1. A machine tool for machining a workpiece chucked in a working space of the machine tool by a tool, comprising:
- a machine bed (110) including a cuttings collection area (130) having at least one delivery channel (131) opened on the working-space side, for collecting cuttings falling down during machining the workpiece, and
- a conveyor for discharging cuttings, fallen down at said cuttings collection area (130), in said at least one delivery channel (131),
said conveyor having a fixed support axle (142) extending within said at least one delivery channel (131) in the longitudinal direction of said delivery channel, wherein a scroll element (143) is rotatably held on said fixed support axle (142), and
said conveyor further comprising a drive (141) for driving the rotary motion of said scroll element (143) around said fixed support axle (142), **characterized in that**
said fixed support axle (142) has at least one superficially extending groove recess (142a; 142b; 142c) extending in the longitudinal direction of said delivery channel.

2. The machine tool according to claim 1, **characterized in that**
in driving the rotary motion of said scroll element (143) around said fixed support axle (142) said conveyor is configured to discharge cuttings to a first end portion of said at least one delivery channel (131).

3. The machine tool according to claim 2, **characterized by**
a discharge opening (120; 115) for discharging cuttings from said at least one delivery channel (131), said discharge opening being arranged at the first end portion of said at least one delivery channel.

4. The machine tool according to claim 2 or 3, **characterized in that**
said drive (141) being arranged at a second end portion of said at least one delivery channel (131) that is arranged on the side of said at least one delivery channel opposed to the first end portion.

5. The machine tool according to one of the claims 2 to 4, **characterized in that**
said at least one delivery channel (131) has an inclination angle declining towards the first end portion.

6. The machine tool according to one of the claims 2 to 4, **characterized in that**
said at least one delivery channel (131) has an inclination angle rising towards the first end portion.

7. The machine tool according to claim 6, **characterized in that**
at a second end portion arranged on the side of said delivery channel opposed to the first end portion, said at least one delivery channel (131) has a drain opening for draining lubricating liquids and cooling liquids, respectively.

8. The machine tool according to one of the preceding claims, **characterized in that**
said fixed support axle (142) is formed as a hollow axle.

9. The machine tool according to one of the preceding claims, **characterized in that**
said fixed support axle (142) has a substantially circular cross-sectional profile and said scroll element (143), viewed in the longitudinal direction of said at least one delivery channel, has a substantially annular profile with a substantially circular outer circumferential profile (143b) and/or with a substantially circular inner circumferential profile (143a).

10. The machine tool according to claim 9, **characterized in that**
an outer diameter (142d) of the circular cross-sectional profile of said fixed support axle (142) is smaller than a diameter of said circular inner circumferential profile (143c) of said scroll element.

11. The machine tool according to one of the preceding claims, **characterized in that**
said at least one delivery channel (131) comprises a shaped metal sheet or is configured by a shaped metal sheet.

12. The machine tool according to one of the preceding claims, **characterized in that**
said cuttings collection area (130) has at least one other delivery channel (131) opened on the working-space side, for collecting cuttings falling down during machining the workpiece,
said conveyor has at least another fixed support axle (142) extending within said at least one other delivery channel (131) in the longitudinal direction of said other delivery channel, wherein another scroll element (143) is rotatably held on said other fixed support axle (142) and said conveyor further comprises another drive (141) for driving the rotary motion of said other scroll element (143) around said other fixed support axle (142), and
said delivery channels (131) of said cuttings collection area (130) especially extend in parallel to each other.

13. A conveyor for discharging cuttings fallen down at the cuttings collection area (130) of a machine bed of a machine tool, for use on said machine tool in machining a workpiece chucked in a working space of said machine tool by a tool, comprising:
- a support axle (142) fixedly attachable to said machine bed,
- a scroll element (143) which in the state of being installed on said machine tool is rotatably held on said support axle (142), and
- a drive (141) for driving the rotary motion of said scroll element (143) around said fixed support axle (142), **characterized in that**
said fixed support axle (142) has at least one superficially extending groove recess (142a; 142b; 142c) extending in the longitudinal direction of the delivery channel.

## Revendications

1. Machine-outil pour l'usinage par enlèvement de copeaux d'une pièce serrée dans une chambre de travail de la machine-outil avec un outil, avec :
- un banc de machine (110), qui présente une zone de collecte de copeaux (130) avec au moins un canal de transport (131) ouvert côté chambre de travail pour collecter les copeaux tombant lors de l'usinage de la pièce, et
- un dispositif de transport pour évacuer les copeaux tombés de la zone de collecte de copeaux (130) dans le au moins un canal de transport (131),
dans laquelle
le dispositif de transport présente un axe de support (142) fixe, qui s'étend dans la direction longitudinale du canal de transport dans le au moins un canal de transport (131), dans laquelle un élément spiral (143) est retenu en rotation sur l'axe de support (142) fixe, et
le dispositif de transport comprend en outre un entraînement (141) pour entraîner le mouvement rotatif de l'élément spiral (143) autour de l'axe de support (142) fixe, **caractérisée en ce que**
l'axe de support (142) fixe présente au moins un évidement rainuré (142a; 142b; 142c) s'étendant en surface, qui s'étend dans la direction longitudinale du canal de transport.

2. Machine-outil selon la revendication 1, **caractérisée en ce que**
le dispositif de transport, lors de l'entraînement du mouvement rotatif de l'élément spiral (143) autour de l'axe de support (142) fixe, est conçu pour évacuer les copeaux vers une première partie d'extrémité du au moins un canal de transport (131).

3. Machine-outil selon la revendication 2, **caractérisée par**
une ouverture d'évacuation (120 ; 115) pour évacuer les copeaux du au moins un canal de transport (131), dans laquelle l'ouverture d'évacuation est disposée sur la première partie d'extrémité du au moins un canal de transport.

4. Machine-outil selon la revendication 2 ou 3, **caractérisée en ce que** l'entraînement (141) est disposé sur une deuxième partie d'extrémité du au moins un canal de transport (131), qui est disposée sur la face du au moins un canal de transport opposée à la première partie d'extrémité.

5. Machine-outil selon l'une quelconque des revendications 2 à 4, **caractérisée en ce que**
le au moins un canal de transport (131) présente un angle d'inclinaison descendant en direction de la première partie d'extrémité.

6. Machine-outil selon l'une quelconque des revendications 2 à 4, **caractérisée en ce que**
le au moins un canal de transport (131) présente un angle d'inclinaison s'élevant en direction de la première partie d'extrémité.

7. Machine-outil selon la revendication 6, **caractérisée en ce que**
le au moins un canal de transport (131) présente sur une deuxième partie d'extrémité, qui est disposée sur la face du canal de transport opposée à la première partie d'extrémité, une ouverture d'écoulement pour l'écoulement de liquide de lubrification ou refroidissement.

8. Machine-outil selon l'une quelconque des revendications précédentes, **caractérisée en ce que**
l'axe de support (142) fixe est réalisé sous la forme d'un axe creux.

9. Machine-outil selon l'une quelconque des revendications précédentes, **caractérisée en ce que**
l'axe de support (142) fixe présente un profil de section transversale sensiblement circulaire et l'élément spiral (143) présente, vu dans la direction longitudinale du au moins un canal de transport, un profil sensiblement annulaire avec un profil périphérique extérieur (143b) sensiblement circulaire et/ou avec un profil périphérique intérieur (143a) sensiblement circulaire.

10. Machine-outil selon la revendication 9, **caractérisée en ce que**
un diamètre extérieur (142d) du profil de section transversale circulaire de l'axe de support (142) fixe est plus petit qu'un diamètre du profil périphérique intérieur (143c) circulaire de l'élément spiral.

11. Machine-outil selon l'une quelconque des revendications précédentes, **caractérisée en ce que**
le au moins un canal de transport (131) comprend une tôle façonnée ou est configuré par une tôle façonnée.

12. Machine-outil selon l'une quelconque des revendications précédentes, **caractérisée en ce que**
la zone de collecte de copeaux (130) présente au moins un autre canal de transport (131) ouvert côté chambre de travail pour la collecte de copeaux tombant lors de l'usinage de la pièce, et
le dispositif de transport présente au moins un autre axe de support (142) fixe, qui s'étend dans le au moins un autre canal de transport (131) dans la direction longitudinale de l'autre canal de transport, dans laquelle un autre élément spiral (143) est retenu en rotation sur l'autre axe de support (142) fixe, et dans laquelle le dispositif de transport comprend en outre un autre entraînement (141) pour entraîner le mouvement rotatif de l'autre élément spiral (143) autour de l'autre axe de support (142) fixe,
les canaux de transport (131) de la zone de collecte de copeaux (130) s'étendent parallèlement les uns aux autres.

13. Dispositif de transport pour l'évacuation de copeaux tombés sur une zone de collecte de copeaux (130) d'un banc de machine d'une machine-outil destiné à être utilisé sur la machine-outil pour l'usinage par enlèvement de copeaux d'une pièce serrée dans une chambre de travail de la machine-outil avec un outil, avec :
- un axe de support (142) pouvant être fixé de manière fixe sur le banc de machine,
- un élément spiral (143), qui, dans l'état monté sur la machine-outil, est retenu en rotation sur l'axe de support (142), et
- un entraînement (141) pour entraîner le mouvement rotatif de l'élément spiral (143) autour de l'axe de support (142) fixe, **caractérisé en ce que**
l'axe de support (142) fixe présente au moins un évidement rainuré (142a; 142b; 142c) s'étendant en surface, qui s'étend dans la direction longitudinale du canal de transport.
